(19) **Europäisches Patentamt**
**European Patent Office**
**Office européen des brevets**

(11) **EP 4 130 728 A1**

(12) **EUROPEAN PATENT APPLICATION**
published in accordance with Art. 153(4) EPC

(43) Date of publication:
**08.02.2023 Bulletin 2023/06**

(21) Application number: **21777179.9**

(22) Date of filing: **23.03.2021**

(51) International Patent Classification (IPC):
**G01N 27/30** (1968.09)    **B32B 7/025** (2019.01)
**B32B 9/00** (1968.09)    **B32B 15/08** (1968.09)
**B32B 27/36** (1968.09)    **C25B 11/00** (1974.07)

(52) Cooperative Patent Classification (CPC):
**B32B 7/025; B32B 9/00; B32B 15/08; B32B 27/36;**
**C25B 11/00; G01N 27/30**

(86) International application number:
**PCT/JP2021/011992**

(87) International publication number:
**WO 2021/193631 (30.09.2021 Gazette 2021/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **26.03.2020 JP 2020055726**
**11.03.2021 JP 2021039731**

(71) Applicant: **Nitto Denko Corporation**
**Ibaraki-shi**
**Osaka 567-8680 (JP)**

(72) Inventors:
• **YAMADA, Kyotaro**
**Ibaraki-shi, Osaka 567-8680 (JP)**
• **HAISHI, Motoki**
**Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **ELECTRODE**

(57)    An electrode 1 includes a resin film 2, a metal underlying layer 3, and an electrically conductive carbon layer 4 having sp$^2$ bonding and sp$^3$ bonding in order toward one side in a thickness direction. A ratio of the number of sp$^3$-bonded atoms to the sum of the number of sp$^3$-bonded atoms and the number of sp$^2$-bonded atoms is 0.25 or more. A thickness of the metal underlying layer 3 is below 50 nm.

FIG. 1

1

One side | Plane direction

Other side | Thickness direction

**Description**

TECHNICAL FIELD

The present invention relates to an electrode.

BACKGROUND ART

Conventionally, an electrode in which an underlying thin film and a carbon thin film are laminated in order on a single surface of a plastic substrate has been known (ref: for example, Patent Document 1 below).

Citation List

Patent Document

Patent Document 1: No. WO2016/013478

SUMMARY OF THE INVENTION

PROBLEM TO BE SOLVED BY THE INVENTION

Recently, an electrode having further higher sensitivity is required. Therefore, it is proposed that a potential window is broadened by increasing a ratio of the number of $sp^3$-bonded atoms to the number of $sp^3$-bonded atoms and the number of $sp^2$-bonded atoms in the carbon thin film.

However, when the ratio of the number of $sp^3$-bonded atoms is increased, there is a problem that the carbon thin film becomes hard, and therefore, the electrode warps.

The present invention provides an electrode which suppresses an amount of warpage, while being capable of broadening a potential window.

MEANS FOR SOLVING THE PROBLEM

The present invention (1) includes an electrode including a resin film, a metal underlying layer, and an electrically conductive carbon layer having $sp^2$ bonding and $sp^3$ bonding in order toward one side in a thickness direction, wherein a ratio of the number of $sp^3$-bonded atoms to the sum of the number of $sp^3$-bonded atoms and the number of $sp^2$-bonded atoms is 0.25 or more, and a thickness of the metal underlying layer is below 50 nm.

The present invention (2) includes the electrode described in (1), wherein a material for the metal underlying layer is at least one metal element selected from the group consisting of titanium, tantalum, chromium, molybdenum, and tungsten.

The present invention (3) includes the electrode described in (1) or (2), wherein a thickness of the electrically conductive carbon layer is 0.2 nm or more and 50 nm or less.

The present invention (4) includes the electrode described in any one of (1) to (3), wherein a material for the resin film is polyethylene terephthalate.

EFFECT OF THE INVENTION

The electrode of the present invention suppresses an amount of warpage, while being capable of broadening a potential window.

BRIEF DESCRIPTION OF THE DRAWINGS

FIG. 1 shows a cross-sectional view of one embodiment of an electrode of the present invention.
FIG. 2 shows a perspective view for illustrating measurement of a curl amount of Examples.

DESCRIPTION OF EMBODIMENTS

<One Embodiment>

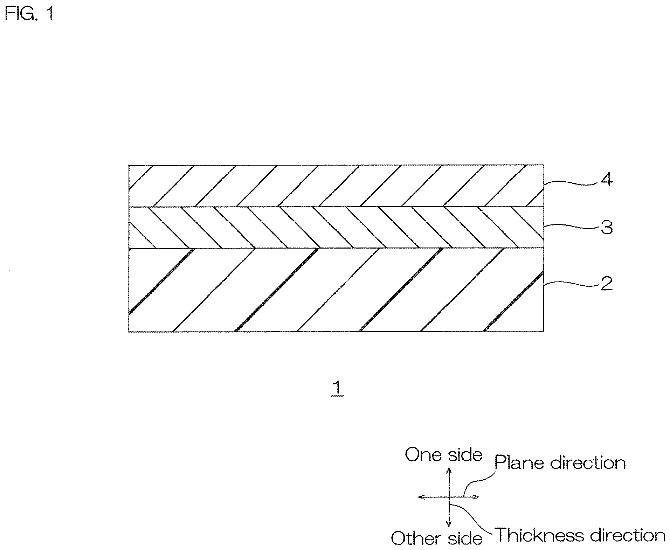

One embodiment of an electrode of the present invention is described with reference to FIG. 1.

(Electrode 1)

As shown in FIG. 1, an electrode 1 has a predetermined thickness, and has a film shape (including a sheet shape) extending in a plane direction perpendicular to a thickness direction. The electrode 1 has one surface in the thickness direction which is flat along the plane direction, and the other surface spaced apart from one surface in the thickness direction.

Specifically, the electrode 1 includes a resin film 2, a metal underlying layer 3 disposed on one surface in the thickness direction of the resin film 2, and an electrically conductive carbon layer 4 disposed on one surface in the thickness direction of the metal underlying layer 3. That is, the electrode 1 includes the resin film 2, the metal underlying layer 3, and the electrically conductive carbon layer 4 in order at one side in the thickness direction. Preferably, the electrode 1 consists of the resin film 2, the metal underlying layer 3, and the electrically conductive carbon layer 4. Each layer is described in detail below.

(Resin Film 2)

The resin film 2 forms the other surface in the thickness direction of the electrode 1. The resin film 2 has a film shape extending in the plane direction. The resin film 2 is a substrate film in the electrode 1.

The resin film 2 has, for example, flexibility. Specifically, a folding resistance test (JIS C 5016 (1994)) of the resin film 2 is, for example, 250 times or more, preferably 500 times or more. When the folding resistance test of the resin film 2 is the above-described lower limit or more, the resin film 2 has excellent flexibility.

Examples of a material for the resin film 2 include polyester resins (for example, polyethylene terephthalate, polyethylene naphthalate), acetate resins, polyether sulfone resins, polycarbonate resins, polyamide resins, polyimide resins, polyolefin resins (for example, polycycloolefin polymer), (meth)acrylic resins, polyvinyl chloride resins, polyvinylidene chloride resins, polystyrene resins, polyvinyl alcohol resins, polyarylate resins, and polyphenylene sulfide resins. Preferably, polyester resins are used, more preferably, polyethylene terephthalate is used.

A thickness of the resin film 2 is not particularly limited, and is, for example, 2 $\mu$m or more, preferably 20 $\mu$m or more, and for example, 1000 $\mu$m or less, preferably 500 $\mu$m or less.

(Metal Underlying Layer)

The metal underlying layer 3 is disposed on one surface in the thickness direction of the resin film 2. Specifically, the metal underlying layer 3 is in contact with the entire one surface in the thickness direction of the resin film 2. The metal underlying layer 3 extends in the plane direction. The metal underlying layer 3 is an intermediate layer located between the resin film 2 and the electrically conductive carbon layer 4.

Examples of a material for the metal underlying layer 3 include group 4 metal elements such as titanium and zirconium; group 5 metal elements such as vanadium, niobium, and tantalum; group 6 metal elements such as chromium, molybdenum, and tungsten; group 7 metal elements such as manganese; group 8 metal elements such as iron; group 9 metal elements such as cobalt; group 10 metal elements such as nickel and platinum; group 11 metal elements such as gold; group 12 metal elements such as zinc; group 13 metal elements such as aluminum and gallium; and group 14 metal elements such as germanium and tin. These materials may be used alone or in combination. As a material for the metal underlying layer 3, preferably, titanium, tantalum, chromium, molybdenum, and tungsten are used, and from the viewpoint of chemical stability, more preferably, titanium and tungsten are used, further more preferably, tungsten is used.

A thickness of the metal underlying layer 3 is below 50 nm, preferably 45 nm or less, more preferably 40 nm or less, further more preferably 35 nm or less. When the thickness of the metal underlying layer 3 is above the above-described upper limit, the electrode 1 warps.

Further, the thickness of the metal underlying layer 3 is, for example, 0.1 nm or more, preferably 1 nm or more, more preferably 5 nm or more. When the thickness of the metal underlying layer 3 is the above-described lower limit or more, stability of sensing is excellent.

The thickness of the metal underlying layer 3 is determined by an X-ray diffraction method. The X-ray diffraction method is described in detail in Examples.

(Electrically Conductive Carbon Layer 4)

The electrically conductive carbon layer 4 has electrical conductivity. The electrically conductive carbon layer 4 forms one surface in the thickness direction of the electrode 1. The electrically conductive carbon layer 4 is disposed on one surface in the thickness direction of the metal underlying layer 3. Specifically, the electrically conductive carbon layer 4 is in contact with the entire one surface in the thickness direction of the metal underlying layer 3. The electrically conductive carbon layer 4 extends in the plane direction.

The electrically conductive carbon layer 4 has carbon having $sp^2$ bonding and carbon having $sp^3$ bonding as a main component. That is, the electrically conductive carbon layer 4 is a layer having a graphite-type structure and a diamond structure. Thus, the electrically conductive carbon layer 4 has excellent electrical conductivity, and the sensitivity with respect to an object to be measured is sufficiently improved.

The electrically conductive carbon layer 4 may also include, for example, oxygen other than carbon. Specifically, for example, oxygen is included in one surface in the thickness direction of the electrically conductive carbon layer 4. A concentration ratio (O/C) of oxygen to carbon in one surface in the thickness direction of the electrically conductive carbon layer 4 is not particularly limited, and is, for example, 0.001 or more, and for example, 0.2 or less.

Further, the electrically conductive carbon layer 4 allows mixing of a trace amount of unavoidable impurities other than oxygen.

A ratio ($sp^3/sp^3+sp^2$) of the number of $sp^3$-bonded atoms to the sum of the number of $sp^3$-bonded atoms and the number of $sp^2$-bonded atoms is 0.25 or more, preferably 0.30 or more, more preferably 0.35 or more in the electrically conductive carbon layer 4. When the ratio ($sp^3/sp^3+sp^2$) of the number of $sp^3$-bonded atoms is below the above-described lower limit, it is not possible to broaden a potential window of the electrode 1.

Further, the ratio ($sp^3/sp^3+sp^2$) of the number of $sp^3$-bonded atoms to the sum of the number of $sp^3$-bonded atoms and the number $sp^2$-bonded atoms is, for example, 0.9 or less, preferably 0.6 or less. When the ratio ($sp^3/sp^3+sp^2$) of the number of $sp^3$-bonded atoms is the above-described upper limit or less, it is possible to ensure the electrical conductivity of the electrically conductive carbon layer 4, and suppress a reduction in detection sensitivity of the electrode 1.

The ratio ($sp^3/sp^3+sp^2$) of the number of $sp^3$-bonded atoms is calculated based on the peak strength of the $sp^2$ bonding and the peak strength of the $sp^3$ bonding in a spectrum obtained by measuring one surface in the thickness direction of the electrically conductive carbon layer 4 by X-ray photoelectron spectroscopy.

Surface resistance on one surface in the thickness direction of the electrically conductive carbon layer 4 is, for example, $1.0 \times 10^4 \Omega/\square$ or less, preferably $1.0 \times 10^3 \Omega/\square$ or less.

A thickness of the electrically conductive carbon layer 4 is, for example, 0.1 nm or more, preferably 0.2 nm or more, and 100 nm or less, preferably 50 nm or less. When the thickness of the electrically conductive carbon layer 4 is the above-described lower limit or more, it is possible to develop stable electrode properties. On the other hand, when the thickness of the electrically conductive carbon layer 4 is the above-described upper limit or less, since it has excellent flexibility, handleability of the electrode 1 is improved. The thickness of the electrically conductive carbon layer 4 is determined by the X-ray diffraction method. The X-ray diffraction method is described in detail in Examples.

(Properties of Electrode 1)

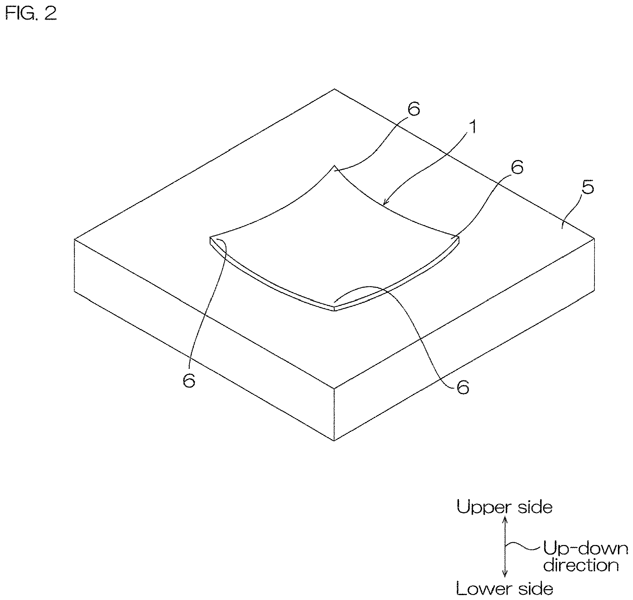

A curl amount of the electrode 1 is small, and specifically, the curl amount of the electrode 1 which is cut into a rectangular shape of 100 mm×100 mm is, for example, 40 mm or less, preferably 30 mm or less, more preferably 20 mm or less, further more preferably 15 mm or less, most preferably 0 mm. As shown in FIG. 2, the curl amount is determined by placing the electrode 1 which is cut into the above-described size on the upper surface of a flat plate 5. A temperature at this time is 23°C. Thereafter, when four corner portions 6 warp up, each amount of warpage (height from the flat plate) is measured, thereby obtaining the curl amount as its average. As the curl amount of the electrode 1 becomes smaller, an amount of warpage of the electrode 1 is suppressed.

The thickness of the electrode 1 is the total thickness of the resin film 2, the metal underlying layer 3, and the electrically conductive carbon layer 4, and specifically, is, for example, 2 μm or more, preferably 20 μm or more, and for example, 1000 μm or less, preferably 500 μm or less.

(Method for Producing Electrode 1)

Next, a method for producing the electrode 1 is described.

First, in this method, the resin film 2 is prepared.

Then, the metal underlying layer 3 is formed on one surface in the thickness direction of the resin film 2. A method for forming the metal underlying layer 3 is not particularly limited, and examples thereof include metal film forming methods such as a dry method, and a wet method such as plating. Preferably, a dry method is used. Examples of the dry method include a PVD method (physical vapor deposition method) and a CVD method (chemical vapor deposition method), and preferably, a PVD method is used. Examples of the PVD method include a sputtering method, a vacuum deposition method, a laser deposition method, and an ion plating method (arc deposition method etc.). Preferably, a sputtering method is used. A target in the sputtering method is, for example, a material for the metal underlying layer 3. An example of the sputtering gas includes an inert gas such as Ar and Xe. A pressure in the sputtering is, for example, 1 Pa or less. A film forming temperature is, for example, 50°C or more, and for example, 200°C or less.

Thereafter, the electrically conductive carbon layer 4 is formed on one surface in the thickness direction of the metal underlying layer 3. An example of a method for forming the electrically conductive carbon layer 4 includes a dry method. Examples of the dry method include a PVD method (physical vapor deposition method) and a CVD method (chemical vapor deposition method), and preferably, a PVD method is used. Examples of the PVD method include a sputtering method, a vacuum deposition method, a laser deposition method, and an ion plating method (arc deposition method etc.). Preferably, a sputtering method is used.

Examples of the sputtering method include an unbalanced magnetron sputtering method (UBM sputtering method), a large power pulse sputtering method, an electron cyclotron resonance sputtering method, an RF sputtering method, a DC sputtering method (DC magnetron sputtering method etc.), a DC pulse sputtering method, and an ion beam sputtering method. From the viewpoint of easily setting a ratio of the number of $sp^3$-bonded atoms within the above-described desired range, and also, from the viewpoint of improving adhesiveness to a film forming rate and the metal underlying layer 3, more preferably, an UBM sputtering method is used.

An example of the target in the sputtering method includes sintered carbon. An example of the sputtering gas includes an inert gas. A pressure in the sputtering is, for example, 1 Pa or less. A film forming temperature is, for example, 0°C or more, and for example, 100°C or less.

The electrically conductive carbon layer 4 may be, if necessary, subjected to known surface treatment such as ion milling, ion bombardment treatment (ion bombardment), electrolytic polishing, voltage application cycle (number of cycles of 2 times or more and 20 times or less), or the like.

In order to set the ratio of the number of $sp^3$-bonded atoms within the above-described desired range, the sputtering conditions and the surface treatment described above are appropriately selected.

Thus, the electrode 1 including the resin film 2, the metal underlying layer 3, and the electrically conductive carbon layer 4 in order at one side in the thickness direction is obtained.

(Application of Electrode 1)

The electrode 1 can be used as various electrodes, and is preferably used as an electrode for electrochemical measurement which carries out an electrochemical measurement method, specifically, as a working electrode which carries out cyclic voltammetry (CV) or as a working electrode which carries out an anodic-stripping-voltammetry (ASV).

(Function and Effect of One Embodiment)

Then, according to the electrode 1, since the ratio of the number of $sp^3$-bonded atoms to the sum of the number of $sp^3$-bonded atoms and the number of $sp^2$-bonded atoms is 0.25 or more, it is possible to broaden the potential window.

On the other hand, in the electrode 1, since the thickness of the metal underlying layer 3 is below 50 nm, in the metal underlying layer 3, such internal stress that imparts (applies) the force to distort the resin film 2 is reduced, and as a result, the amount of warpage is suppressed.

Therefore, the electrode 1 suppresses the amount of warpage, while being capable of broadening the potential window.

Further, in the electrode 1, when the material for the metal underlying layer 3 is at least one metal element selected from the group consisting of titanium, tantalum, chromium, molybdenum, and tungsten, it is possible to ensure sufficient adhesiveness of the resin film 2 and the electrically conductive carbon layer 4.

Further, when the thickness of the electrically conductive carbon layer 4 is 0.2 nm or more, it is possible to develop the stable electrode properties. On the other hand, when the thickness of the electrically conductive carbon layer 4 is 50 nm or less, since it has excellent flexibility, the handleability of the electrode 1 is improved.

(Modified Examples)

As shown in FIG. 1, in one embodiment, the electrode 1 includes the one resin film 2, the one metal underlying layer 3, and the one electrically conductive carbon layer 4. On the other hand, the electrode 1 may also include the one resin film 2, the two metal underlying layers 3, and the two electrically conductive carbon layers 4. That is, the electrode 1 can include the two metal underlying layers 3 and the two electrically conductive carbon layers 4 with respect to the one resin film 2. In this case, the electrically conductive carbon layer 4, the metal underlying layer 3, the resin film 2, the metal underlying layer 3, and the electrically conductive carbon layer 4 are disposed in order in the thickness direction.

In addition, in order to form the metal underlying layer 3 having a desired thickness, the above-described metal film forming method can be carried out a plurality of times.

Examples

Next, the present invention is further described based on Examples and Comparative Examples below. The present invention is however not limited by these Examples and Comparative Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF

EMBODIMENTS".

(Method for Measuring Thickness of Metal Underlying Layer 3 and Thickness of Electrically Conductive Carbon Layer 4)

First, a method for measuring the thickness of the metal underlying layer 3 and the thickness of the electrically conductive carbon layer 4 is shown below. Specifically, X-ray reflectance was measured with the X-ray reflectance method as a measurement principle and using a powder X-ray diffractometer (manufactured by Rigaku Corporation, "RINT-2200") in the following <Measurement Conditions>, and the obtained measurement data was analyzed with an analysis software (manufactured by Rigaku Corporation, "GXRR3"), thereby calculating the thickness of each of the metal underlying layers 3 and each of the electrically conductive carbon layers 4 of Examples and Comparative Examples.

For the analysis, a three-layer model of the resin film 2, the metal underlying layer 3, and the electrically conductive carbon layer 4 was used in the following <Analysis Conditions>, a target thickness and the density of 19.30 $g/cm^3$ of the metal underlying layer 3 were input as an initial value, and also, the target thickness and the density of 19.5 $g/cm^3$ of the electrically conductive carbon layer 4 were input as an initial value. Thereafter, by carrying out the least square fitting with the measurement value, each of the thickness of the metal underlying layer 3 and the thickness of the electrically conductive carbon layer 4 was calculated.

<Measurement Conditions>

Measurement device: powder X-ray diffractometer (manufactured by Rigaku Corporation, "RINT-2000")
Light source: Cu-K$\alpha$ ray (wavelength: 1,5418Å), 40 kV, 40 mA
Optical system: parallel beam optical system
Divergence slit: 0.05 mm
Light receiving slit: 0.05 mm
Monochromatization and parallelization: using a multi-layer Gabel mirror
Measurement mode: $\theta/2\theta$ scan mode
Measurement range ($2\theta$): 0.3 to 2.0°

<Analysis Conditions>

Analysis software: manufactured by Rigaku Corporation, "GXRR3"
Analysis method: least square fitting
Analysis range ($2\theta$): $2\theta$=0.3 to 2.0°

(Example 1)

(Preparation of Resin Film 2)

The resin film 2 made of polyethylene terephthalate having a thickness of 50 $\mu$m was prepared.

(Formation of Metal Underlying Layer 3)

Next, the metal underlying layer 3 made of tungsten was formed on one surface in the thickness direction of the resin film 2 by a sputtering method. A thickness of the metal underlying layer 3 was 40 nm. The conditions of the sputtering method were described below.

Target material: tungsten
Argon gas pressure: 0.6 Pa
Target power: 400 W
Film-forming roll temperature: 120°C

(Formation of Electrically Conductive Carbon Layer 4)

Thereafter, the electrically conductive carbon layer 4 was formed on one surface in the thickness direction of the metal underlying layer 3 by an UBM sputtering method. A thickness of the electrically conductive carbon layer 4 was 30 nm. The conditions of the UBM sputtering method were described below.

Target material: sintered carbon
Argon gas pressure: 0.8 Pa
Target power: 400 W
Film-forming roll temperature: 30°C
DC bias (between the metal underlying layer 3 and the target material): 75 V

Thereafter, a voltage application cycle for reciprocating the applied voltage between 0 V and 2.3 V was carried out 10 times with respect to the electrically conductive carbon layer 4.
Thus, the electrode 1 was obtained.

(Example 2)

The electrode 1 was obtained in the same manner as in Example 1. However, the thickness of the metal underlying layer 3 was changed from 40 nm to 30 nm.

(Example 3)

The electrode 1 was obtained in the same manner as in Example 1. However, the thickness of the metal underlying layer 3 was changed from 40 nm to 10 nm.

(Example 4)

The electrode 1 was obtained in the same manner as in Example 1. However, the thickness of the metal underlying layer 3 was changed from 40 nm to 30 nm. And, the DC bias was changed from 75 V to 30 V.

(Comparative Example 1)

The electrode 1 was obtained in the same manner as in Example 1. However, the thickness of the metal underlying layer 3 was changed from 40 nm to 50 nm.

(Comparative Example 2)

The electrode 1 was obtained in the same manner as in Example 1. However, the thickness of the metal underlying layer 3 was changed from 40 nm to 50 nm. On the other hand, the DC bias was not applied, and the voltage application cycle was not carried out.

(Example 5)

The electrode 1 was obtained in the same manner as in Example 2. However, in the formation of the metal underlying layer 3, chromium was used for the target material. That is, the material for the metal underlying layer 3 was changed from tungsten to chromium.

(Comparative Example 3)

The electrode 1 was obtained in the same manner as in Example 5. However, the thickness of the metal underlying layer 3 was changed from 30 nm to 50 nm.

(Example 6)

The electrode 1 was obtained in the same manner as in Example 2. However, in the formation of the metal underlying layer 3, molybdenum was used for a target material. That is, the material for the metal underlying layer 3 was changed from tungsten to molybdenum.

(Comparative Example 4)

The electrode 1 was obtained in the same manner as in Example 6. However, the thickness of the metal underlying layer 3 was changed from 30 nm to 50 nm.

(Example 7)

The electrode 1 was obtained in the same manner as in Example 2. However, in the formation of the metal underlying layer 3, tantalum was used for a target material. That is, the material for the metal underlying layer 3 was changed from tungsten to tantalum.

(Comparative Example 5)

The electrode 1 was obtained in the same manner as in Example 7. However, the thickness of the metal underlying layer 3 was changed from 30 nm to 50 nm.

(Example 8)

The electrode 1 was obtained in the same manner as in Example 2. However, in the formation of the metal underlying layer 3, titanium was used for a target material. That is, the material for the metal underlying layer 3 was changed from tungsten to titanium.

The material for the metal underlying layer 3, the thickness of the metal underlying layer 3, and the thickness of the electrically conductive carbon layer 4 in Examples 1 to 8 and Comparative Examples 1 to 5 are shown in Tables 1 and 2.

(Evaluation)

The following items were evaluated. The results are described in Tables 1 and 2.

(Ratio of Number of $Sp^3$-Bonded Atoms to Sum of Number of $Sp^3$-Bonded Atoms and Number of $Sp^2$-Bonded Atoms)

The X-ray photoelectron spectroscopy was carried out with respect to one surface in the thickness direction of the electrically conductive carbon layer 4 under the following <Measurement Conditions>. In a spectrum thus obtained, the ratio ($sp^3/sp^3+sp^2$) of the number of $sp^3$-bonded carbon atoms to the sum of the number of $sp^2$-bonded carbon atoms and the number of $sp^3$-bonded carbon atoms was calculated based on the peak strength of the $sp^2$ bonding and the peak strength of the $sp^3$ bonding.

<Measurement Conditions>

Measurement device: X-ray photoelectron spectroscopy (XPS) device (manufactured by Shimadzu Corporation, trade name: "AXIS Nova")
X-ray source: $AlK\alpha$ (1486.6eV) with Rowland circle diameter of 500 mm monochromator, 15 kV, 10 mA
Photoelectron spectrometer: orbital radius of 165 mm, electrostatic double hemispherical analyzer/spherical mirror analyzer combined-type
Detector: delay line detector (DLD) system

Energy resolution: Ag3d5/two photoelectron peak of 0.48 eV or less as a half width

Charging neutralization: uniform low-energy electron irradiation

(Curl Amount)

First, the electrode 1 was cut into a size of a height of 100 mm and a length of 100 mm. Next, as shown in FIG. 2, the electrode 1 was placed on the upper surface of the flat plate 5 so that the resin film 2 was located at the lower side. A temperature at this time was 23°C. The four corner portions 6 warped up after the elapse of one minute, and each amount of warpage (height from the flat plate 5) was measured, thereby obtaining a curl amount as its average. Suppression of the amount of warpage was evaluated from the curl amount in accordance with the following criteria.

Excellent: curl amount was 40 mm or less.

Bad: curl amount was above 40 mm.

[Table 1]

Table 1

| Ex.·Comparative Ex. | Metal Underlying Layer | | $\dfrac{sp^3}{sp^3+sp^2}$ | Evaluation |
| --- | --- | --- | --- | --- |
| | Material | Thickness [nm] | | Curl |
| Ex. 1 | Tungsten (w) | 40 | 0.40 | Excellent |
| Ex. 2 | Tungsten (w) | 30 | 0.40 | Excellent |
| Ex. 3 | Tungsten (w) | 10 | 0.40 | Excellent |
| Ex. 4 | Tungsten (w) | 30 | 0.30 | Excellent |
| Comparative Ex. 1 | Tungsten (w) | 50 | 0.40 | Bad |
| Comparative Ex. 2 | Tungsten (w) | 50 | 0.20 | Excellent |

[Table 2]

Table 2

| Ex.·Comparative Ex. | Metal Underlying Layer | | $\dfrac{sp^3}{sp^3+sp^2}$ | Evaluation |
| --- | --- | --- | --- | --- |
| | Material | Thickness [nm] | | Curl |
| Ex. 5 | Chromium (Cr) | 30 | 0.40 | Excellent |
| Comparative Ex. 3 | Chromium (Cr) | 50 | 0.40 | Bad |
| Ex. 6 | Molybdenum (Mo) | 30 | 0.40 | Excellent |
| Comparative Ex. 4 | Molybdenum (Mo) | 50 | 0.40 | Bad |
| Ex. 7 | Tantalum (Ta) | 30 | 0.40 | Excellent |
| Comparative Ex. 5 | Tantalum (Ta) | 50 | 0.40 | Bad |
| Ex. 8 | Titanium (Ti) | 30 | 0.40 | Excellent |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

INDUSTRIAL APPLICATION

The electrode of the present invention is used as an electrode for electrochemical measurement which carries out an electrochemical measurement method.

Description of Reference Numerals

1    Electrode

2    Resin film

3    Metal underlying layer

4    Electrically conductive carbon layer

**Claims**

1. An electrode comprising:

   a resin film,
   a metal underlying layer, and
   an electrically conductive carbon layer having $sp^2$ bonding and $sp^3$ bonding in order toward one side in a thickness direction, wherein
   a ratio of the number of $sp^3$-bonded atoms to the sum of the number of $sp^3$-bonded atoms and the number of $sp^2$-bonded atoms is 0.25 or more, and
   a thickness of the metal underlying layer is below 50 nm.

2. The electrode according to claim 1, wherein
   a material for the metal underlying layer is at least one metal element selected from the group consisting of titanium, tantalum, chromium, molybdenum, and tungsten.

3. The electrode according to claim 1, wherein
   a thickness of the electrically conductive carbon layer is 0.2 nm or more and 50 nm or less.

4. The electrode according to claim 2, wherein
   a thickness of the electrically conductive carbon layer is 0.2 nm or more and 50 nm or less.

5. The electrode according to claim 1, wherein
   a material for the resin film is polyethylene terephthalate.

6. The electrode according to claim 2, wherein
   a material for the resin film is polyethylene terephthalate.

7. The electrode according to claim 3, wherein
   a material for the resin film is polyethylene terephthalate.

8. The electrode according to claim 4, wherein
   a material for the resin film is polyethylene terephthalate.

FIG. 1

4

3

2

1

One side

Plane direction

Other side  Thickness direction

FIG. 2

**INTERNATIONAL SEARCH REPORT**

International application No.

PCT/JP2021/011992

### A. CLASSIFICATION OF SUBJECT MATTER

Int.Cl. G01N27/30(2006.01)i, B32B7/025(2019.01)i, B32B9/00(2006.01)i, B32B15/08(2006.01)i, B32B27/36(2006.01)i, C25B11/00(2021.01)i

FI: G01N27/30B, B32B7/025, B32B9/00A, B32B15/08E, B32B27/36, C25B11/00

According to International Patent Classification (IPC) or to both national classification and IPC

### B. FIELDS SEARCHED

Minimum documentation searched (classification system followed by classification symbols)

Int.Cl. G01N27/00-G01N27/49

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-105637 A (NITTO DENKO CORPORATION) 27 June 2019 (2019-06-27), abstract, paragraphs [0026], [0034]-[0042], [0048]-[0052], [0100]-[0104], fig. 1 | 1-8 |
| Y | 加藤大 他，電気化学分析の可能性を拡げるナノカーボン薄膜電極の開発，Bunseki Kagaku, 2018, vol. 67, no. 11, pp. 635-645, p. 638, left column, third paragraph, l. 3, (KATO, Dai et al., Nanocarbon film electrodes can expand the possibility of electroanalysis) | 1-8 |
| Y | WO 2010/004690 A1 (NEC CORPORATION) 14 January 2010 (2010-01-14), paragraphs [0143], [0158] | 1-8 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 12 May 2021 | 25 May 2021 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

| INTERNATIONAL SEARCH REPORT | International application No. |
|---|---|
| Information on patent family members | PCT/JP2021/011992 |

```
JP 2019-105637 A   27 June 2019        WO 2019/117112 A1
                                        TW 201928344 A
                                        CN 111373248 A

WO 2010/004690 A1  14 January 2010     (Family: none)
```

Form PCT/ISA/210 (patent family annex) (January 2015)

**EP 4 130 728 A1**

**Patent documents cited in the description**

- WO 2016013478 A